# EUROPEAN PATENT APPLICATION

(11) **EP 4 620 325 A1**
(43) Date of publication of application: **24.09.2025**
(21) Application number: 23890317.3
(22) Date of filing: 21.08.2023
(51) Int. Cl.: A24F 40/46, A24F 40/57

(54) **AEROSOL GENERATING APPARATUS AND HEATING STRUCTURE THEREOF**

(30) Priority: 17.11.2022 CN 202211442120
(71) Applicant: Smoore International Holdings Limited, George Town, Grand Cayman, KY1-1111 (KY)
(72) Inventor: MA, Lei, Shenzhen, Guangdong 518102 (CN); ZHOU, Hongming, Shenzhen, Guangdong 518102 (CN); LI, Rihong, Shenzhen, Guangdong 518102 (CN); DU, Xianwu, Shenzhen, Guangdong 518102 (CN); ZHANG, Guo, Shenzhen, Guangdong 518102 (CN)
(74) Representative: Westphal, Mussgnug & Partner, Patentanwälte mbB
(86) International application number: PCT/CN2023/114111
(87) International publication number: WO 2024/103878

(57) **Abstract**

The present disclosure relates to an aerosol generating device and a heating structure thereof. The heating structure includes a heating element capable of radiating infrared light waves in a power-on state, a tube body for the infrared light waves to pass through, and a temperature measurement unit for temperature measurement. The heating element is at least partially spaced apart from the tube wall of the tube body. The heating element includes a heating portion and a conductive portion connected to one end of the heating portion. The temperature measurement unit is arranged on the tube wall of the tube body. **In** the present disclosure, the heating element is at least partially spaced apart from the tube wall of the tube body. This design prevents overheating of the heating element, enhancing the user's puffing experience. Additionally, the temperature measurement unit ensures high accuracy, fast response, and a simple structure.

## Description

### TECHNICAL FIELD

The present disclosure relates to the field of heat-not-burn atomization, and in particular to an aerosol generating device and a heating structure thereof.

### BACKGROUND

In related arts, an aerosol generating device is the electronic equipment used for heating an aerosol generating substrate (solid substrate such as tobacco and other plant leaf products) without burning it. Generally, the aerosol generating substrate is atomized within 350°C. The disadvantage of this heating method is that since a heating element conducts heat directly or indirectly through a solid material to the aerosol generating substrate, it requires that the working temperature of the heating element should not be too high, and otherwise it will cause the aerosol generating substrate to be overheated to influence the puffing taste of the aerosol generating device. Therefore, when the heating element operates under conditions above 400°C, temperature detection and control are particularly important.

### SUMMARY

The technical problem to be solved by the present disclosure is to provide an improved aerosol generating device and a heating structure thereof.

The technical solution adopted by the present disclosure to solve the technical problem is as follows: A heating structure includes a heating element capable of radiating infrared light waves in a power-on state, a tube body for the infrared light waves to pass through, and a temperature measurement unit for temperature measurement, where the heating element is at least partially spaced apart from the tube wall of the tube body, the heating element includes a heating portion and a conductive portion connected to one end of the heating portion, and the temperature measurement unit is arranged on a tube wall of the tube body.

In some embodiments, the temperature measurement unit includes a covering section covering the tube body, the covering section is at least partially overlapped with a first projection section of the heating portion on a surface of the tube body where the covering section is located, and/or the covering section is at least partially overlapped with a second projection section of the conductive portion on the surface of the tube body where the covering section is located.

**In** some embodiments, the temperature measurement unit includes a temperature measurement section and a lead wire section that are electrically connected, all of the temperature measurement section is overlapped with the first projection section of the heating portion on the surface of the tube body where the covering section is located, and the lead wire section is arranged at an end of the temperature measurement section close to the conductive portion.

**In** some embodiments, the temperature measurement unit includes a temperature measurement section and a lead wire section that are electrically connected, one part of the temperature measurement section is overlapped with the first projection section of the heating portion on the surface of the tube body where the covering section is located, another part of the temperature measurement section is overlapped with the second projection section of the conductive portion on the surface of the tube body where the covering section is located, and the lead wire section is arranged at an end of the temperature measurement section close to the conductive portion.

In some embodiments, the temperature measurement unit includes a temperature measurement section and a lead wire section that are electrically connected, all of the temperature measurement section is overlapped with the second projection section of the conductive portion on the surface of the tube body where the covering section is located, and the lead wire section is arranged at an end of the temperature measurement section close to the conductive portion.

In some embodiments, the temperature measurement unit includes a temperature measurement section and a lead wire section that are electrically connected, the temperature measurement section is arranged on the tube body at an end close to the heating portion, and the lead wire section is arranged at an end of the temperature measurement section away from the conductive portion.

In some embodiments, the temperature measurement section is at least partially made of a TCR (Temperature Coefficient of Resistance) material.

In some embodiments, a temperature coefficient of the TCR material is greater than 300.

In some embodiments, the temperature measurement section is spiral in shape.

In some embodiments, the temperature measurement section is arranged on an outer surface or an inner surface of the tube body.

In some embodiments, the temperature measurement section is formed of a TCR material through at least one of screen printing, physical vapor deposition, spray coating, and dipping.

In some embodiments, the heating portion is longitudinally arranged and includes a first heating section that is linear and a second heating section that is spiral and wound around the first heating section, and one end of the first heating section is electrically connected to one end of the second heating section; and the other end of the first heating section and the other end of the second heating section are electrically connected to the conductive portion.

In some embodiments, the heating portion includes a third heating section having a double-spiral shape, the third heating section includes a spiral section and an electrical connection end located at one end of the spiral section, and the electrical connection end is electrically connected to the conductive portion.

In some embodiments, the heating element is arranged on an inner side of the tube body, and the heating element is spaced apart from an inner wall of the tube body.

In some embodiments, the tube body includes a first sleeve and a second sleeve sleeved around an outer periphery of the first sleeve;
a gap is provided between the first sleeve and the second sleeve, and the gap forms an accommodating cavity for accommodating the heating element; and
the heating element is arranged on the outer periphery of the first sleeve and is spaced apart from an outer wall of the first sleeve, and a heating cavity for heating an aerosol generating substrate is formed on an inner side of the first sleeve.

In some embodiments, an inner wall of the second sleeve is provided with a reflective layer for reflecting the infrared light waves.

In some embodiments, a lower part of the tube body is provided with a fixing base, and the temperature measurement unit is arranged above the fixing base or is partially overlapped with the fixing base.

In some embodiments, a highest working temperature of the heating element is 500°C-1300°C.

The present disclosure further provides an aerosol generating device, including the heating structure described above.

The present disclosure has the following beneficial effects: In the present disclosure, the heating structure includes a heating element capable of radiating infrared light waves in a power-on state and a tube body for the infrared light waves to pass through, and the heating element is at least partially spaced apart from the tube wall of the tube body, thus solving the problem that the puffing taste of a user is influenced since the temperature of the heating element is too high under the condition that the highest working temperature of the heating element is greater than 400°C.

In addition, the heating structure further includes a temperature measurement unit, and the temperature measurement unit is arranged on the tube wall of the tube body, thus achieving high temperature measurement accuracy, fast temperature measurement, and simple structure.

### BRIEF DESCRIPTION OF THE DRAWINGS

The present disclosure will be further described below in combination with the embodiments with reference to the drawings. In the figures:
FIG. 1 is a 3D schematic structural diagram of an aerosol generating device according to some embodiments of the present disclosure;
FIG. 2 is a 3D schematic structural diagram of a heating structure of the aerosol generating device in FIG. 1;
FIG. 3 is a schematic sectional diagram of the heating structure in FIG. 2;
FIG. 4 is a 3D schematic structural diagram of a heating structure of an aerosol generating device according to another embodiment of the present disclosure;
FIG. 5 is a schematic sectional diagram of the heating structure in FIG. 4;
FIG. 6 is a 3D schematic structural diagram of a heating structure of an aerosol generating device according to yet another embodiment of the present disclosure;
FIG. 7 is a schematic sectional diagram of the heating structure in FIG. 6;
FIG. 8 is a schematic exploded structural diagram of the heating structure in FIG. 6;
FIG. 9 is a schematic sectional diagram of a heating structure of an aerosol generating device according to yet another embodiment of the present disclosure; and
FIG. 10 is a schematic exploded structural diagram of the heating structure in FIG. 9.

### DETAILED DESCRIPTION

To provide a clearer understanding of the technical features, objectives, and effects of the present disclosure, the specific embodiments of the present disclosure will be described below with reference to the drawings.

In the description of the present disclosure, it needs to be understood that directional and positional relationships indicated by terms such as "longitudinal", "lower", "top", "inner" and "outer" are directional or positional relationships based on the drawings, or directional or positional relationships formed by commonly placing the product of the present disclosure in use, which are only for the purposes of conveniently describing the present disclosure and simplifying the description, instead of indicating or implying that the device or element referred to must have a specific orientation or be constructed and operated in a specific orientation, and cannot be understood as limitations on the present disclosure.

In addition, terms "first" and "second" are used merely for the purpose of description, and cannot be construed as indicating or implying relative importance or implying a quantity of indicated technical features. Therefore, a feature defined by "first" or "second" may explicitly indicate or implicitly include at least one of such features.

In the present disclosure, unless otherwise explicitly specified and limited, the terms "connect", and "fix" are understood in a broad sense. For example, it may be a fixed connection, a detachable connection, or an integral connection; or it may be mechanical connection or electrical connection; or it may be direct connection, indirect connection through an intermediate medium, or internal communication between two elements or interaction relationship between two elements, unless otherwise specified explicitly. Those skilled in the art may understand the specific meanings of the above terms in the present disclosure based on specific situations.

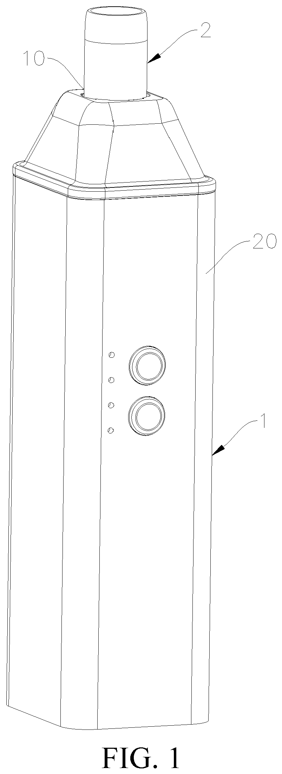

FIG. 1 shows an aerosol generating device 1 and an aerosol generating substrate 2 detachably inserted into one end of the aerosol generating device 1 in some embodiments of the present disclosure. In some embodiments, the aerosol generating device 1 may be in a square column shape for ease of gripping by the user, and may perform low-temperature baking and heating on the aerosol generating substrate 2 inserted therein to release an aerosol extract from the aerosol generating substrate 2 in a non-burning state. In some embodiments, the aerosol generating substrate 2 may be cylindrical in shape and may include a treated plant leaf solid aerosol generating substrate 2. As can be understood, the aerosol generating device 1 is not limited to be in a square column shape. In some other embodiments, it may also in any other shape such as cylindrical shape or elliptical column shape.

In some embodiments, the aerosol generating device 1 may include a heating structure 10 and a housing 20 for carrying the heating structure 10. In some embodiments, the heating structure 10 may be cylindrical and may allow the aerosol generating substrate 2 to be detachably inserted to heat and bake the aerosol generating substrate 2. In some embodiments, the aerosol generating device 1 may further include a battery (not shown) arranged in the housing 20. The battery is electrically connected to the heating structure 10 to supply power to the heating structure 10.

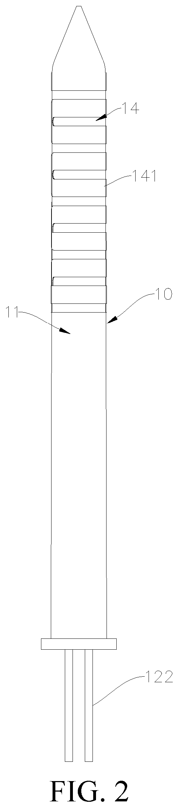

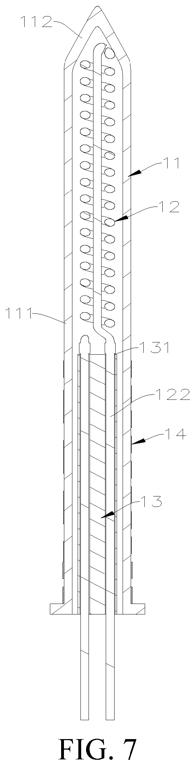

Referring to FIG. 2 to FIG. 8 together, in some embodiments, the heating structure 10 may include a tube body 11 for infrared light waves to pass through, a heating element 12 capable of radiating the infrared light waves in a power-on state, a fixing base 13, and a temperature measurement unit 14. The heating element 12 is arranged on the inner surface or outer surface of the tube body 11, and the heating element 12 is at least partially spaced apart from the tube body 11. It is configured to generate heat and excite the infrared light waves in a power-on state, thus heating the aerosol generating substrate 2. Moreover, since the heating element 12 is at least partially spaced apart from the tube body 11 and the aerosol generating substrate 2 is heated through infrared radiation, the problem that the puffing taste of the user is influenced since the working temperature of the heating element 12 is too high can be solved. Specifically, in this embodiment, the tube body 11 may allow the infrared light waves to pass through, thus facilitating the heating element 12 to radiate the infrared light waves to heat the aerosol generating substrate 2. Specifically, a gap is provided between the heating element 12 and the tube body 11. In a power-on state, the heating element 12 quickly heats to increase the temperature up to 1000°C-1300°C within 1 s-3 s, the surface temperature of the tube body 11 can be controlled below 350°C, and the overall atomization temperature of the aerosol generating substrate 2 is controlled at 300°C-350°C, thus achieving precise atomization of the aerosol generating substrate 2 mainly in a wave band of 2 um-5 um. The fixing base 13 is arranged at the lower open end of the tube body 11, and a conductive portion 122 of the heating element 12 penetrates through the fixing base 13 to fix the heating element 12. The temperature measurement unit 14 is arranged above the fixing base 13 or is partially overlapped with the fixing base 13. The temperature measurement unit 14 is arranged on the tube wall of the tube body 11, and is configured to detect temperature change of the tube wall, so as to atomize the aerosol generating substrate 2 into an aerosol at the specific temperature and avoid the situation that the puffing taste of the aerosol is influenced since the aerosol generating substrate 2 is overheated.

In some embodiments, the tube body 11 is made of a material such as quartz glass, ceramics, or diamond, and is configured to allow infrared light waves to pass through to heat the aerosol generating substrate 2. In some embodiments, the tube body 11 may include a cylindrical main body 111 and a conical top portion 112 arranged at the top of the cylindrical main body 111 and integrally formed with the main body 111.

In some embodiments, the number of the heating element 12 may be one and may be longitudinally arranged, and may be wound to form a heating portion 121 that is spiral on the whole. Specifically, the heating element 12 may be cylindrical on the whole and may be wound to form a single-spiral structure, double-spiral structure, M-shaped structure, N-shaped structure, or structure with any other shape. Of course, as can be understood, in some other embodiments, the number of the heating element 12 is not limited to one, and may be two or more than two. The shape of the heating element 12 is not limited to a cylindrical shape. In some embodiments, the shape of the heating element 12 may be a sheet shape.

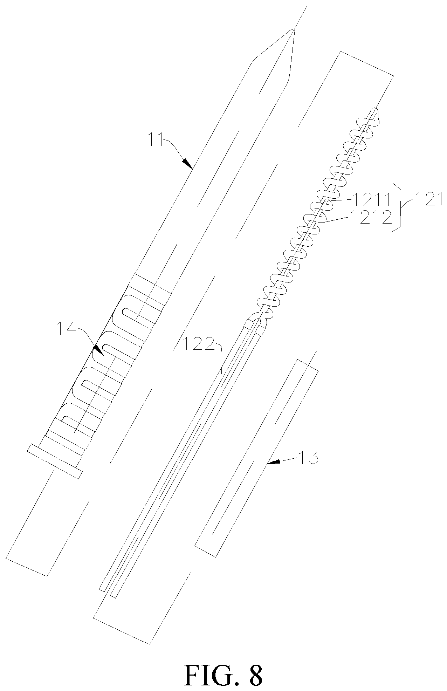

In some embodiments, the heating element 12 may be arranged on the inner side of the tube body 11, and the heating element 12 is spaced apart from the inner wall of the tube body 11. In some embodiments, the heating element 12 may include a heating portion 121 capable of generating infrared light waves in a power-on state, and a conductive portion 122 arranged at one end of the heating portion 121 and configured to connect with power. As shown in FIG. 8, in some embodiments, the heating portion 121 may be longitudinally arranged, and include a first heating section 1211 and a second heating section 1212 wound around the first heating section 1211. The first heating section 1211 is linear in shape, the second heating section 1212 is spiral in shape, and one end of the first heating section 1211 is connected to one end of the second heating section 1212. Two conductive portions 122 are respectively connected to the other end of the first heating section 1211 and the other end of the second heating section 1212.

In some embodiments, the heating portion 121 includes a double-spiral third heating section (not shown), the third heating section includes a spiral section and an electrical connection end located at one end of the spiral section, and the electrical connection end is electrically connected to the conductive portion 122. In some embodiments, the heating element 12 may include a heating substrate for generating heat in a power-on state, and an infrared radiation layer. The infrared radiation layer is arranged on the outer surface of the heating substrate and is configured to radiate infrared light waves. In some embodiments, the heating substrate includes a metal substrate, and the metal substrate is made of a metal material such as nickel-chromium alloy wire or iron-chromium-aluminum alloy wire, which has good high-temperature oxidation resistance, high stability, and good deformation resistance. The highest working temperature of the heating element 12 is 500°C-1300°C. The heating substrate may be bent into a cylindrical or sheet shape, so the radial size or thickness of the heating substrate is 0.15 mm-0.8 mm. The thickness of the infrared radiation layer is 10 um-300 um. It needs to be stated that in the field of heating-not-burning, the highest working temperature of the heating element in the existing technology generally does not exceed 400°C, while the highest temperature of the heating element in the present disclosure may reach over 1000°C. Through the innovation of this solution, the preheating time can be greatly reduced, the puffing taste can be improved, and the situation that the taste deteriorates due to overheating can be avoided.

In this embodiment, the heating element 12 further includes an antioxidant layer, and the antioxidant layer is formed between the heating substrate and the infrared radiation layer. Specifically, the antioxidant layer may be an oxide film, the heating substrate undergoes high-temperature heat treatment to form a dense oxide film on its own surface, and the oxide film forms the antioxidant layer. Of course, as can be understood, in some other embodiments, the antioxidant layer is not limited to including an oxide film formed by itself. In some other embodiments, it may be an antioxidant coating layer coated on the outer surface of the heating substrate. By forming the antioxidant layer, it can ensure that the heating substrate is not or is rarely oxidized when heated in the air environment, thus improving the stability of the heating substrate. Therefore, there is no need to vacuum and fill inert gas or reducing gas into the accommodating cavity for accommodating the heating element 12 on the inner side of the tube body 11, nor to seal the opening, thus simplifying the assembling process of the entire heating structure 10 and reducing the manufacturing cost. In this embodiment, the thickness of the antioxidant layer may be selectively 1 um-150 um. When the thickness of the antioxidant layer is less than 1 um, the heating substrate is easily oxidized. When the thickness of the antioxidant layer is greater than 150 um, it will influence the heat conduction between the heating substrate and the infrared radiation layer.

In this embodiment, the infrared radiation layer may be an infrared layer. The infrared layer may be an infrared layer forming substrate formed on the side of the antioxidant layer away from the heating substrate under high-temperature heat treatment. In this embodiment, the infrared layer forming substrate may be a silicon carbide, spinel, or composite substrate thereof. Of course, as can be understood, in some other embodiments, the infrared radiation layer is not limited to the infrared layer. In some other embodiments, the infrared radiation layer may be a composite infrared layer. In this embodiment, the infrared layer may be formed on the side of the antioxidant layer away from the heating substrate through dip coating, spray coating, brush coating, and other methods. The thickness of the infrared radiation layer may be 10 um-300 um. When the thickness of the infrared radiation layer is between 10 um-300 um, the thermal radiation effect is better, and the atomization efficiency and atomization taste of the aerosol generating substrate 2 are better. Of course, as can be understood, in some other embodiments, the thickness of the infrared radiation layer is not limited to 10 um-300 um.

In some embodiments, the heating element 12 further includes a bonding layer arranged between the antioxidant layer and the infrared radiation layer. The bonding layer may be configured to prevent the heating substrate from being broken down locally, thus further improving the bonding strength between the antioxidant layer and the infrared radiation layer. In some embodiments, the bond in the bonding layer may be glass powder, that is, the bonding layer may be a glass powder layer.

In some embodiments, the fixing base 13 may be made of ceramic or PEEK high-temperature insulating material. It may include a fixing through hole 131 provided in the fixing base 13. The fixing through hole 131 is configured to allow the conductive portion 122 to be inserted in.

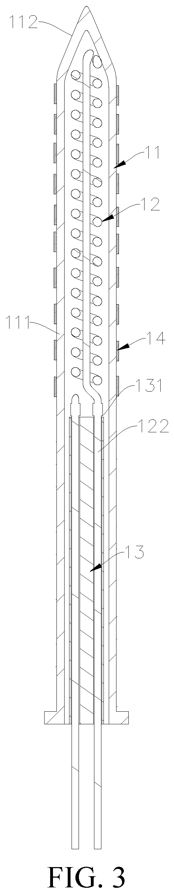

Furthermore, as shown in FIG. 2 and FIG. 3, in some embodiments, the temperature measurement unit 14 includes a covering section covering the tube body 11, and the covering section is at least partially overlapped with a first projection section of the heating portion 121 on the surface of the tube body 11 where the covering section is located. Preferably, in some embodiments, the temperature measurement unit 14 includes a temperature measurement section 141 and a lead wire section (not shown) that are electrically connected, all of the temperature measurement section 141 is overlapped with the first projection section of the heating portion 121 on the surface of the tube body 11 where the covering section is located, and the lead wire section is arranged at the end of the temperature measurement section 141 close to the conductive portion 122, thus effectively solving the problem of temperature measurement delay. In addition, the temperature measurement section 141 is arranged on the outer surface or inner surface of the tube body 11, which can directly measure the temperature of the heating substrate, so as to control the overall atomization temperature of the aerosol generating substrate 2 at 300°C-350°C, thus achieving precise atomization of the aerosol generating substrate 2 mainly in a wave band of 2 um-5 um, and effectively ensuring accurate and stable temperature measurement.

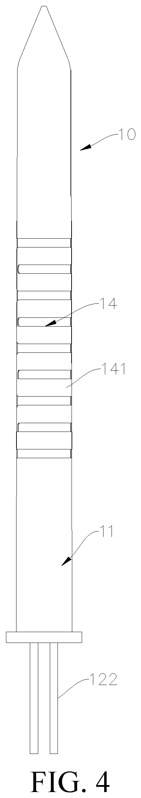

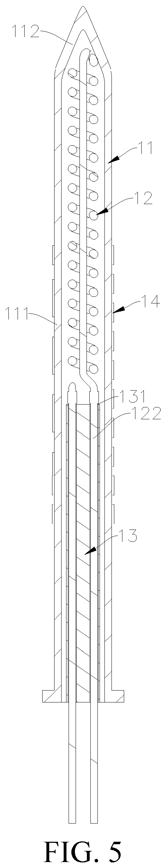

Furthermore, as shown in FIG. 4 and FIG. 5, in some other embodiments, the temperature measurement unit 14 includes a covering section covering the tube body 11, the covering section is at least partially overlapped with a first projection section of the heating portion 121 on the surface of the tube body 11 where the covering section is located, and the covering section is at least partially overlapped with a second projection section of the conductive portion 122 on the surface of the tube body 11 where the covering section is located. Specifically, the temperature measurement unit 14 includes a temperature measurement section 141 and a lead wire section that are electrically connected, one part of the temperature measurement section 141 is overlapped with the first projection section of the heating portion 121 on the surface of the tube body 11 where the covering section is located, the other part of the temperature measurement section 141 is overlapped with the second projection section of the conductive portion 122 on the surface of the tube body 11 where the covering section is located, and the lead wire section is arranged at the end of the temperature measurement section 141 close to the conductive portion 122. By adopting such arrangement, the heat on the heating portion 121 can be quickly transferred to the temperature measurement section 141, thus effectively solving the problem of temperature measurement delay. In addition, the temperature measurement section 141 is arranged on the outer surface or inner surface of the tube body 11, which can directly measure the temperature of the heating substrate, so as to control the overall atomization temperature of the aerosol generating substrate 2 at 300°C-350°C, thus achieving precise atomization of the aerosol generating substrate 2 mainly in a wave band of 2 um-5 um, and effectively ensuring accurate and stable temperature measurement.

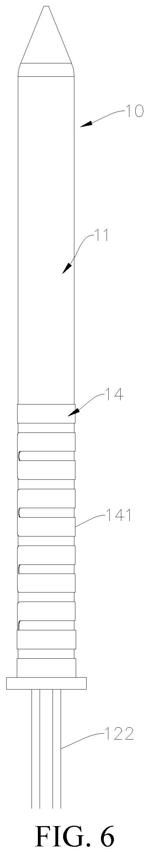

Referring to FIG. 6 and FIG. 8 together, in some embodiments, the temperature measurement unit 14 includes a covering section covering the tube body 11, and the covering section is at least partially overlapped with a second projection section of the conductive portion 122 on the surface of the tube body 11 where the covering section is located. Specifically, the temperature measurement unit 14 includes a temperature measurement section 141 and a lead wire section that are electrically connected, all of the temperature measurement section 141 is overlapped with the second projection section of the conductive portion 122 on the surface of the tube body 11 where the covering section is located, and the lead wire section is arranged at the end of the temperature measurement section 141 close to the conductive portion 122. The heat on the heating portion 121 can be quickly transferred to the temperature measurement section 141, thus effectively solving the problem of temperature measurement delay. In addition, the temperature measurement section 141 is arranged on the outer surface or inner surface of the tube body 11, which can directly measure the temperature of the heating substrate, so as to control the overall atomization temperature of the aerosol generating substrate 2 at 300°C-350°C, thus achieving precise atomization of the aerosol generating substrate 2 mainly in a wave band of 2 um-5 um, and effectively ensuring accurate and stable temperature measurement.

In some embodiments, the temperature measurement section 141 is at least partially made of a TCR material. The TCR material is formed through at least one of screen printing, physical vapor deposition, spray coating, and dipping. In some embodiments, the TCR material may be spiral in shape. In addition, preferably, in some embodiments, the temperature coefficient of the TCR material is greater than 300, thus making the measurement data more accurate. As can be understood, the temperature coefficient of the TCR material may also be set to be less than 300. As can be understood, the TCR material is not limited to be spiral in shape, and it may also be sheetlike or tubular in shape.

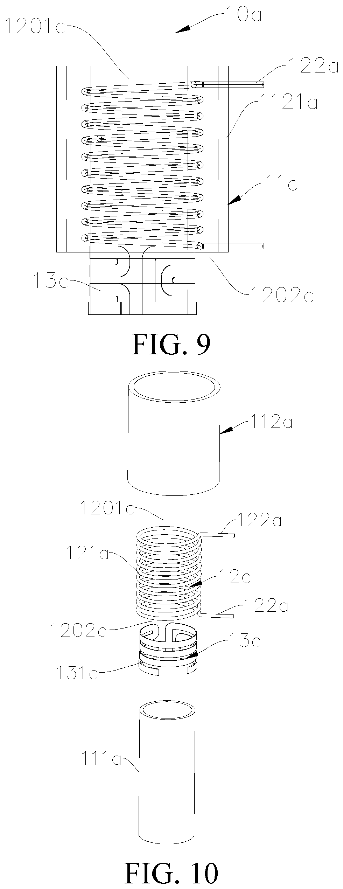

FIG. 9 and FIG. 10 show a heating structure 10a according to yet another embodiment of the present disclosure. The difference from the first embodiment mainly lies in that in some embodiments, the heating structure 10a may include a tube body 11a for infrared light waves to pass through, a heating element 12a, and a temperature measurement unit 13a. The heating element 12a is arranged on the inner surface or outer surface of the tube body 11a. In addition, the heating element 12a is at least partially spaced apart from the tube body 11a. It is configured to generate infrared light waves in a power-on state, thus heating the aerosol generating substrate. Specifically, in this embodiment, the tube body 11a may allow the infrared light waves to pass through, thus facilitating the heating element 12 to radiate the infrared light waves to heat the aerosol generating substrate. Specifically, a gap is provided between the heating element 12a and the tube body 11a. In a power-on state, the heating element 12a quickly heats to increase the temperature up to 1000°C-1300°C within 1 s-3 s, the surface temperature of the tube body 11a can be controlled below 350°C, and the overall atomization temperature of the aerosol generating substrate is controlled at 300°C-350°C, thus achieving precise atomization of the aerosol generating substrate mainly in a wave band of 2 um-5 um. The temperature measurement unit 13a is arranged on the tube body 11a, and is configured to detect temperature change of the tube wall, so as to atomize the aerosol generating substrate into an aerosol at the specific temperature and avoid the situation that the puffing taste of the aerosol is influenced since the aerosol generating substrate is overheated.

In some embodiments, the tube body 11a may include a first sleeve 111a and a second sleeve 112a sleeved around the outer periphery of the first sleeve 111a; a gap is provided between the first sleeve 111a and the second sleeve 112a, and the gap forms an accommodating cavity for accommodating the heating element 12a; and the heating element 12a is arranged on the outer periphery of the first sleeve 111a and is spaced apart from the outer wall of the first sleeve 111a, and a heating cavity for heating an aerosol generating substrate is formed on the inner side of the first sleeve 111a.

In some embodiments, the first sleeve 111a may be cylindrical in shape, may be made of a material such as quartz glass, ceramics, or diamond, and is configured to heat the aerosol generating substrate. As can be understood, the first sleeve 111a is not limited to be cylindrical in shape, and it may also be in any other shape such as square column shape or elliptical column shape.

In some embodiments, the second sleeve 112a may be cylindrical in shape and is provided with a reflective layer 1121a on an inner side thereof, and the reflective layer 1121a is configured to reflect the infrared light waves radiated outwards by the heating element 12a to enhance energy efficiency. As can be understood, the second sleeve 112a is not limited to be cylindrical in shape, and it may also be in any other shape such as square column shape or elliptical column shape.

In some embodiments, the second sleeve 112a may further include a fixing structure, and the fixing structure is configured to fix the heating element 12a.

In some embodiments, the heating element 12a may include a heating portion 121a capable of generating infrared light waves in a power-on state, and two conductive portions 122a arranged at one end of the heating portion 121a and configured to connect with power. The heating portion 121a includes a spiral first heating section. The first heating section includes a first end 1201a and a second end 1202a arranged opposite to the first end 1201a. The two conductive portions 122a are respectively connected to the first end 1201a and the second end 1202a.

In some embodiments, the temperature measurement unit 13a includes a temperature measurement section 131a and a lead wire section that are electrically connected, the temperature measurement section 131a is arranged on the tube body 11a at the end close to the heating portion 121a, and the lead wire section is arranged at the end of the temperature measurement section 131a away from the conductive portions 122a. The heat on the heating portion 121a can be quickly transferred to the temperature measurement section 131a, thus effectively solving the problem of temperature measurement delay. In addition, the temperature measurement section 131a is arranged on the outer surface or inner surface of the tube body 11a, which can directly measure the temperature of the heating substrate, so as to control the overall atomization temperature of the aerosol generating substrate at 300°C-350°C, thus achieving precise atomization of the aerosol generating substrate mainly in a wave band of 2 um-5 um, and effectively ensuring accurate and stable temperature measurement.

As can be understood, the above embodiments show only several preferred implementations of the present disclosure and are described in detail, which, however, are not to be construed as limitations to the patent scope of the present disclosure. It needs to be pointed out that those skilled in the art may freely combine the above technical features and may make several variations and improvements without departing from the concept of the present disclosure, all of which still fall within the scope of protection of the present disclosure. Therefore, any equivalent variations and modifications made within the scope of the claims of the present disclosure still fall within the scope covered by the claims of the present disclosure.

## Claims

1. A heating structure, comprising:
a heating element capable of radiating infrared light waves in a power-on state;
a tube body for the infrared light waves to pass through; and
a temperature measurement unit for temperature measurement, wherein the heating element is at least partially spaced apart from a tube wall of the tube body, wherein the heating element comprises a heating portion and a conductive portion connected to one end of the heating portion, and wherein the temperature measurement unit is arranged on the tube wall of the tube body.

2. The heating structure of claim 1, wherein the temperature measurement unit comprises a covering section covering the tube body, wherein the covering section is at least partially overlapped with a first projection section of the heating portion on a surface of the tube body where the covering section is located, and/or wherein the covering section is at least partially overlapped with a second projection section of the conductive portion on the surface of the tube body where the covering section is located.

3. The heating structure of claim 2, wherein the temperature measurement unit comprises a temperature measurement section and a lead wire section that are electrically connected, wherein all of the temperature measurement section is overlapped with the first projection section of the heating portion on the surface of the tube body where the covering section is located, and
wherein the lead wire section is arranged at an end of the temperature measurement section close to the conductive portion.

4. The heating structure of claim 2, wherein the temperature measurement unit comprises a temperature measurement section and a lead wire section that are electrically connected,
wherein one part of the temperature measurement section is overlapped with the first projection section of the heating portion on the surface of the tube body where the covering section is located, another part of the temperature measurement section is overlapped with the second projection section of the conductive portion on the surface of the tube body where the covering section is located, and
wherein the lead wire section is arranged at an end of the temperature measurement section close to the conductive portion.

5. The heating structure of claim 2, wherein the temperature measurement unit comprises a temperature measurement section and a lead wire section that are electrically connected,
wherein all of the temperature measurement section is overlapped with the second projection section of the conductive portion on the surface of the tube body where the covering section is located, and
wherein the lead wire section is arranged at an end of the temperature measurement section close to the conductive portion.

6. The heating structure of claim 1, wherein the temperature measurement unit comprises a temperature measurement section and a lead wire section that are electrically connected,
wherein the temperature measurement section is arranged on the tube body at an end close to the heating portion, and
wherein the lead wire section is arranged at an end of the temperature measurement section away from the conductive portion.

7. The heating structure of any one of claims 3 to 6, wherein the temperature measurement section is at least partially made of a TCR material.

8. The heating structure of claim 7, wherein a temperature coefficient of the TCR material is greater than 300.

9. The heating structure of any one of claims 3 to 6, wherein the temperature measurement section is spiral in shape.

10. The heating structure of any one of claims 3 to 6, wherein the temperature measurement section is arranged on an outer surface or an inner surface of the tube body.

11. The heating structure of claim 7, wherein the temperature measurement section is formed of the TCR material through at least one of screen printing, physical vapor deposition, spray coating, and dipping.

12. The heating structure of claim 1, wherein the heating portion is longitudinally arranged and comprises a first heating section that is linear and a second heating section that is spiral and wound around the first heating section, and one end of the first heating section is electrically connected to one end of the second heating section; and the other end of the first heating section and the other end of the second heating section are electrically connected to the conductive portion.

13. The heating structure of claim 1, wherein the heating portion comprises a third heating section having a double-spiral shape, the third heating section comprises a spiral section and an electrical connection end located at one end of the spiral section, and the electrical connection end is electrically connected to the conductive portion.

14. The heating structure of claim 1, wherein the heating element is arranged on an inner side of the tube body, and the heating element is spaced apart from an inner wall of the tube body.

15. The heating structure of claim 1, wherein the tube body comprises a first sleeve and a second sleeve sleeved around an outer periphery of the first sleeve;
wherein a gap is provided between the first sleeve and the second sleeve, and the gap forms an accommodating cavity for accommodating the heating element; and
wherein the heating element is arranged on the outer periphery of the first sleeve and is spaced apart from an outer wall of the first sleeve, and a heating cavity for heating an aerosol generating substrate is formed on an inner side of the first sleeve.

16. The heating structure of claim 15, wherein an inner wall of the second sleeve is provided with a reflective layer for reflecting the infrared light waves.

17. The heating structure of claim 14, wherein a lower part of the tube body is provided with a fixing base, and the temperature measurement unit is arranged above the fixing base or is partially overlapped with the fixing base.

18. The heating structure of claim 1, wherein a highest working temperature of the heating element is 500°C-1300°C.

19. An aerosol generating device, comprising:
the heating structure of any one of claims 1 to 18.
